# EUROPEAN PATENT APPLICATION

(11) **EP 4 495 459 A1**
(43) Date of publication of application: **22.01.2025**
(21) Application number: 24185960.2
(22) Date of filing: 02.07.2024
(51) Int. Cl.: F16H 55/08

(54) **ENGAGING PIECE FOR TORQUE TRANSMISSION, ENGAGING DEVICE, TORQUE TRANSMISSION ASSEMBLY, AND VEHICLE**

(30) Priority: 18.07.2023 CN 202310887360
(71) Applicant: Xiaomi EV Technology Co., Ltd., 100176 Beijing (CN)
(72) Inventor: FENG, Li, Beijing 100176 (CN); DONG, Ke, Beijing 100176 (CN)
(74) Representative: Stöckeler, Ferdinand

(57) **Abstract**

The invention provides an engaging piece for torque transmission, an engaging device, a torque transmission assembly, and a vehicle, and relates to the technical field of face gears The engaging piece includes a first disk body, is provided with a first end face tooth portion, the first end face tooth portion includes a plurality of first teeth, the top of each first tooth has a first line (131), the bottom has a second line (132), two sides each have a third line (133), an extension line of the first line (131) and an extension line of the second line (132) of at least one first tooth intersect at a first point (14), extension lines of the two third lines (133) intersect at a second point (15), and the first point (14) is closer to the corresponding first tooth than the second point (15).

## Description

### TECHNICAL FIELD

The invention relates to the technical field of face gears, in particular to an engaging piece for torque transmission, an engaging device, a torque transmission assembly, and a vehicle.

### BACKGROUND OF THE INVENTION

With the rapid development of new energy vehicles, in order to improve the endurance of new energy vehicles, there is an increasing demand for lightweight of new energy vehicles.

The weight of an engaging piece for torque transmission in the related art is large, which does not meet the need for lightweight in new energy vehicles.

### SUMMARY OF THE INVENTION

An object of the invention is to provide an engaging piece for torque transmission, an engaging device, a torque transmission assembly, and a vehicle to solve the above-mentioned problems of the related art.

In order to achieve the above object, one aspect of the invention provides an engaging piece for torque transmission, including a first disk body having a rotation axis and rotatable about the rotation axis; and a first end face tooth portion on the first disk body and configured to mesh with a mating piece connected to the engaging piece so as to transmit torque;

the first end face tooth portion includes a plurality of first teeth, a top of each first tooth has a first line, a bottom of each first tooth has a second line, two sides of each first tooth each have a third line, each first tooth has a first end away from the rotation axis and a second end close to the rotation axis, and the first line, the second line and the third lines all extend along a direction from the first end of the corresponding first tooth to the second end of the corresponding first tooth;

an extension line of the first line and an extension line of the second line of at least one first tooth intersect at a first point, extension lines of the two third lines of at least one first tooth intersect at a second point, and the first point is closer to the corresponding first tooth than the second point.

Optionally, the engaging piece has one virtual radial plane, and the first point and the second point are both located on the radial plane; or,
the engaging piece has two virtual radial planes, and the first point and the second point are located on the two radial planes, respectively.

Optionally, an included angle between the first line and the radial plane is α, where 0°<α<90°.

Optionally, the first point is closer to the corresponding first tooth than the rotation axis; and/or,
the second point is closer to the corresponding first tooth than the rotation axis.

Optionally, the extension line of the second line intersects the rotation axis; and/or,
the two third lines are symmetrically disposed with a midline of the corresponding first tooth extending in a radial direction of the first disk body as an axis of symmetry, and an extension line of the midline intersects the rotation axis.

Optionally, the first point falls on a circumference of a first circle, and a center of the first circle falls on the rotation axis.

Optionally, the first line and the second line of each first tooth intersect at one first point, respectively, all the first points fall on the circumference of the same first circle, and all the first points do not coincide on the circumference of the first circle.

Optionally, the second point falls on the rotation axis.

Optionally, the second point falls on a circumference of a second circle, a center of the second circle falls on the rotation axis, and a radius of the second circle is smaller than a radius of the first circle.

Optionally, two third lines of each first tooth intersect at one second point, respectively;
all the second points fall on the rotation axis; or,
all the second points fall on a circumference of a same second circle, and all the second points do not coincide on the circumference of the second circle.

Optionally, each first tooth includes a first tooth top face, a first tooth bottom face, two first tooth side faces and two opposite first tooth end faces, where the first tooth bottom face is connected to the first disk body, one first tooth end face is closer to the rotation axis than the other first tooth end face, the first line is configured to a first tooth top line of the first tooth top face, the second line is configured to a first tooth bottom line of the first tooth bottom face, and bottom edge lines of the two first tooth side faces are configured to the third lines.

Optionally, a midline of the first tooth top face extending in a radial direction of the first disk body is configured to the first line, and a midline of the first tooth bottom face extending in the radial direction of the first disk body is configured to the second line.

Optionally, the first tooth top face is configured to a planar structure or a curved surface structure.

Optionally, each first tooth includes a first tooth bottom face, two first tooth side faces and two opposite first tooth end faces, where the first tooth bottom face is connected to the first disk body, one first tooth end face is closer to the rotation axis than the other first tooth end face, tops of the two first tooth side faces intersect, so that the first tooth end face is triangular, an intersection line of the tops of the two first tooth side faces is configured to the first line, a midline of the first tooth bottom face extending in a radial direction of the first disk body is configured to the second line, and bottom edge lines of the two first tooth side faces are configured to the third lines.

Optionally, a width dimension of a first end of each first tooth is greater than a width dimension of a second end of the corresponding first tooth on one radial plane, and a width dimension of each first tooth linearly decreases from the first end of the corresponding first tooth to the second end of the first tooth.

Optionally, the first end face tooth portion further includes a first tooth space located between two adjacent first teeth, and a projection of the first tooth space in a direction facing the rotation axis is triangular.

A second aspect of the invention also provides an engaging device, including a fastening component, a mating piece, and the engaging piece for torque transmission described above, where the mating piece and the engaging piece are both connected to the fastening component, and the fastening component is configured to tightly mesh the mating piece with the engaging piece.

Optionally, the mating piece includes a second disk body, where the second disk body can rotate about a rotation axis, and is provided with a second end face tooth portion, and the second end face tooth portion is configured to mesh with a first end face tooth portion of the engaging piece so as to transmit torque;

the second end face tooth portion includes a plurality of second teeth, where two sides of each second tooth are provided with second tooth side lines, respectively, extension lines of the two second tooth side lines of at least one second tooth intersect at a fourth point, and the fourth point falls on the rotation axis.

Optionally, each second tooth has a second tooth top line and a second tooth bottom line;
an extension line of the second tooth top line of at least one second tooth crosses the rotation axis and intersects an extension line of the second tooth bottom line at a third point, and the third point does not fall on the rotation axis.

Optionally, the extension line of the second tooth top line of at least one second tooth intersects the rotation axis, the third point falls on a circumference of a third circle, and a center of the third circle falls on the rotation axis.

Optionally, each second tooth has a second tooth top line and a second tooth bottom line;
where an extension line of the second tooth top line and an extension line of the second tooth bottom line of at least one second tooth intersect at a third point, and the third point falls on the rotation axis and coincides with the fourth point.

Optionally, each second tooth includes a second tooth top face and two opposite second tooth end faces, where one second tooth end face is closer to the rotation axis than the other second tooth end face, and the second tooth end face is trapezoidal; or,

each second tooth further includes two opposite second tooth end faces, where one second tooth end face is closer to the rotation axis than the other second tooth end face, and tops of the two second tooth side faces intersect, so that the second tooth end face is triangular.

Optionally, each second tooth further includes a second tooth bottom face and two second tooth side faces, where the second tooth bottom face is connected to the second disk body, and the two second tooth side faces are each provided with a recessed portion, so that the two second tooth side faces are both of a cambered structure.

A third aspect of the invention also provides a torque transmission assembly, including a drive shaft ball cage, a hub bearing, and the engaging device described above, where the drive shaft ball cage and the hub bearing are connected, one of a mating piece and an engaging piece of the engaging device is connected to the drive shaft ball cage, and the other of the mating piece and the engaging piece is connected to the hub bearing.

A fourth aspect of the invention also provides a vehicle, including the engaging piece for torque transmission described above, or the engaging device described above, or the torque transmission assembly described above.

According to the technical solution, the first point and the second point do not coincide, and the first point is closer to the corresponding first tooth than the second point, so that the thickness of the second end of the first tooth in the direction along the rotation axis is smaller, the weight of the first tooth is reduced, and then the weight of the whole engaging piece is reduced, which can not only meet the torque transmission, but also meet the requirements of new energy vehicles for lightweight and improve the endurance of new energy vehicles.

Other features and advantages of the invention will be described in detail in the Detailed Description section that follows.

### BRIEF DESCRIPTION OF DRAWINGS

The drawings are provided to provide a further understanding of the invention and constitute a part of the specification, and together with the following detailed description, serve to explain the invention, but do not constitute a limitation of the invention. In the drawings:
FIG. 1 is a position schematic diagram of a first point and a second point of an engaging piece according to an example of the invention;
FIG. 2 is a structural schematic diagram of an engaging piece according to an example of the invention;
FIG. 3 is a position schematic diagram of a third point and a fourth point of a mating piece according to an example of the invention; and
FIG. 4 is a structural schematic diagram of a second tooth according to an example of the invention.

### DETAILED DESCRIPTION OF THE INVENTION

Specific embodiments of the invention will be described in detail below with reference to the accompanying drawings. It needs to be understood that the specific embodiments described here are merely used to illustrate and explain the invention, and are not used to limit the invention.

In the invention, unless otherwise stated, directional words such as "up, down, left and right" are usually defined by the direction of the drawing plane of the attached drawings, and "inside and outside" refer to the inside and outside of the relevant parts. Moreover, the terms "first," "second," and the like are used merely to distinguish descriptions and are not to be understood as indicating or implying relative importance.

In the description of the invention, it also needs to be noted that, unless expressly specified and defined otherwise, the terms "arranged" and "connection" are to be understood broadly, e.g., connection may be fixed connection, detachable connection, or integral connection, direct connection, indirect connection through an intermediary, and communication between two elements. The specific meanings of the above terms in the invention can be understood according to specific circumstances by those of ordinary skill in the art.

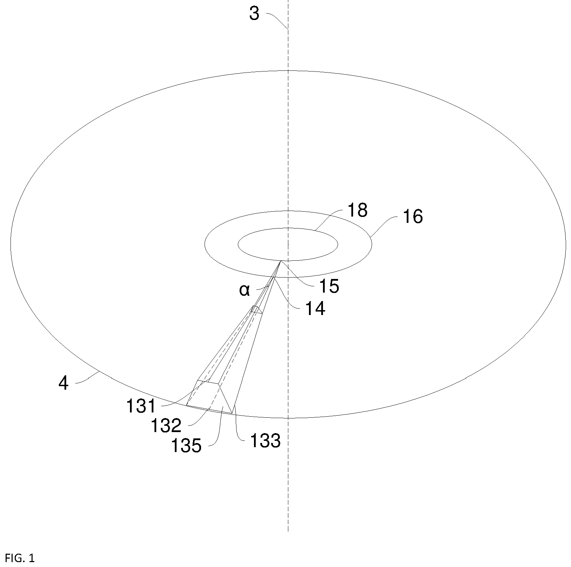

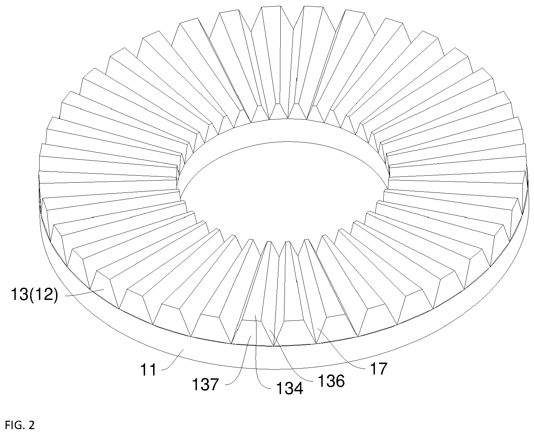

As shown in FIGS. 1 and 2, one aspect of the invention provides an engaging piece for torque transmission, including a first disk body 11 having a rotation axis 3, where the first disk body 11 can rotate about the rotation axis 3, the first disk body 11 is provided with a first end face tooth portion 12, and the first end face tooth portion 12 is configured to mesh with a mating piece connected to the engaging piece so as to transmit torque.

The first end face tooth portion 12 includes a plurality of first teeth 13, where the top of each first tooth 13 has a first line 131, the bottom of each first tooth 13 has a second line 132, and two sides of each first tooth 13 each have a third line 133, each first tooth 13 has a first end away from the rotation axis 3 and a second end close to the rotation axis 3, and the first line 131, the second line 132 and the third lines 133 all extend along a direction from the first end of the corresponding first tooth 13 to the second end of the corresponding first tooth 13.

An extension line of the first line 131 and an extension line of the second line 132 of at least one first tooth 13 intersect at a first point 14, extension lines of the two third lines 133 of at least one first tooth 13 intersect at a second point 15, and the first point 14 is closer to the corresponding first tooth 13 than the second point 15.

The first end face tooth portion 12 is located on one side of the first disk body 11, and the engaging piece and the mating piece realize torque transmission through the meshing of the first end face tooth portion 12 and a second end face tooth portion of the mating piece.

The plurality of first teeth 13 are radially arranged around the rotation axis 3, and, similarly, the first line 131, the second line 132 and the third lines 133 of each first tooth 13 are also radially arranged around the rotation axis 3.

As shown in FIG. 1, the first point 14 is obtained by the intersection of the extension line of the first line 131 extending toward the rotation axis 3 and the extension line of the second line 132 extending toward the rotation axis 3, the second point 15 is obtained by the intersection of the extension lines of the two third lines 133 extending toward the rotation axis 3, the first point 14 and the second point 15 do not coincide, and the linear distance between the first point 14 and the corresponding first tooth 13 is smaller than the linear distance between the second point 15 and the corresponding first tooth 13. It needs to be noted that the first point 14 and the second point 15 are both virtual points, merely for reflecting the design structure of the first tooth 13.

In the above technical solution, by setting the first point 14 and the second point 15 to not coincide, and that the first point 14 is closer to the corresponding first tooth 13 than the second point 15, the thickness of the second end of the first tooth 13 in the direction along the rotation axis is smaller, thus reducing the weight of the first tooth 13, and further reducing the weight of the whole engaging piece, which can not only meet the requirements of torque transmission, but also meet the lightweight requirements of new energy vehicles and increase the endurance of the new energy vehicles.

As shown in FIG. 1, optionally, in an example of the invention, the engaging piece has one virtual radial plane 4, and the first point 14 and the second point 15 are both located on the radial plane 4. By this arrangement, when the engaging piece is connected to the mating piece, the centripetal force when the engaging piece and the mating piece rotate is toward the rotation axis 3, so that the fit tightness of the engaging piece and the mating piece is improved.

It will be appreciated that the thickness of the first end of the first tooth 13 in the direction along the rotation axis 3 is greater than the thickness of the second end of the first tooth 13 in the direction of the rotation axis 3, such that the first line 131 is inclined toward the first disk body 11.

Optionally, in another example of the invention, the engaging piece has two virtual radial planes 4, the first point 14 and the second point 15 are located on the two radial planes 4 respectively, and the two radial planes 4 are spaced apart in the direction of the rotation axis 3.

In some examples, the first point 14 is located above the second point 15 in the direction of the rotation axis 3. This may be achieved by the thickness of the first end of the first tooth 13 in the direction of the rotation axis 3 being smaller than the thickness of the second end of the first tooth 13 in the direction of the rotation axis 3, or by the third line 133 being inclined from the top of the first end of the first tooth 13 to the bottom of the second end of the first tooth 13.

In some other examples, the first point 14 is located below the second point 15 in the direction of the rotation axis 3, such that the third line 133 is inclined from the bottom of the first end of the first tooth 13 to the top of the second end of the first tooth 13.

Optionally, in an example of the invention, an included angle between the first line 131 and the radial plane 4 is α, where 0°<α<90°. By this arrangement, the thickness relationship between the first end of the first tooth 13 and the second end of the first tooth 13 in the direction of the rotation axis 3 can be adjusted so as to coordinate the strength of the first tooth 13 itself, the degree of tightness when the engaging piece is meshed with the mating piece, and the manufacturing complexity and manufacturing cost of the engaging piece.

It will be appreciated that by controlling the magnitude of the angle α, the degree of inclination of the first line 131 can be controlled, thus controlling the linear distance between the first point 14 and the corresponding first tooth 13, so that the thickness of the second end of the first tooth 13 in the direction of the rotation axis 3 can be controlled. In some examples, 45°<α<90°, and the included angle α may be 60°.

Optionally, in an example of the invention, the first point 14 is closer to the corresponding first tooth 13 than the rotation axis 3.

In some examples, the first line 131 is configured to inclined from the top of the first end of the first tooth 13 to the bottom of the second end of the first tooth 13, and the second line 132 is configured to inclined from the bottom of the first end of the first tooth 13 to the top of the second end of the first tooth 13, so that the point of intersection of the first line 131 and the second line 132, i.e., the first point 14 is closer to the first tooth 13 than the rotation axis 3. That is, the first point 14 does not cross the rotation axis 3.

Optionally, in an example of the invention, the first point 14 is closer to the corresponding first tooth 13 than the rotation axis 3, and the second point 15 is closer to the corresponding first tooth 13 than the rotation axis 3.

In some examples, the first line 131 is configured to inclined from the top of the first end of the first tooth 13 to the bottom of the second end of the first tooth 13, and the second line 132 is configured to inclined from the bottom of the first end of the first tooth 13 to the top of the second end of the first tooth 13, so that the point of intersection of the first line 131 and the second line 132, i.e., the first point 14 is closer to the first tooth 13 than the rotation axis 3. Similarly, the third line 133 is inclined from the bottom of the first end of the first tooth 13 to the top of the second end of the first tooth 13. That is to say, both the first point 14 and the second point 15 do not cross the rotation axis 3, and are located between the rotation axis 3 and the corresponding first tooth 13.

As shown in FIG. 1, optionally, in an example of the invention, the first point 14 falls on the circumference of a first circle 16, and the center of the first circle 16 falls on the rotation axis 3. By this arrangement, when the engaging piece and the mating piece are connected, the meshing force generated when the engaging piece and the coupling piece rotate are tangential to the circular structure of the first disk body 11, thus facilitating the transmission of torque. It will be appreciated that the first circle 16 sleeves the rotation axis 3, and is coaxial with the first disk body 11.

Optionally, in other examples, the center of the first circle 16 may not fall on the rotation axis 3, such that the first circle 16 is an eccentric circle, so that it will be appreciated that the thickness of the second end of one first tooth 13 in the direction along the rotation axis 3 may differ such that the first line 131 is skewed, so that the first point 14 formed by the intersection of the first line 131 with the second line 132 lies on the circumference of the eccentric circle.

Optionally, in an example of the invention, the first line 131 and the second line 132 of each first tooth 13 intersect at one first point 14, respectively, all the first points 14 fall on the circumference of the same first circle 16, and all the first points 14 do not coincide on the circumference of the first circle 16. The reason for this arrangement is that the plurality of first teeth 13 are evenly distributed around the rotation axis 3, and the thicknesses of the second ends of all the first teeth 13 in the direction along the rotation axis 3 are the same, in such a way, the first points 14 of all the first teeth 13 fall on the circumference of the same first circle 16, so that the stresses of all the first teeth 13 are balanced for ensuring that the torque is uniformly transmitted, and the structural strengths of all the first teeth 13 are balanced.

Optionally, in another example of the invention, each first tooth 13 has a first line 131 and a second line 132, the first line 131 and the second line 132 of each first tooth 13 intersect at one first point 14, respectively, and the first points 14 may not fall on the circumference of the same first circle 16. It will be appreciated that when the thicknesses of the second ends of each first tooth 13 in the direction along the rotation axis 3 are different, the angles of inclination of the first lines 131 of all the first teeth 13 are different, so that the first points 14 fall on different positions. It needs to be noted that different first points 14 may or may not coincide.

As shown in FIG. 1, optionally, in an example of the invention, the extension line of the second line 132 intersects the rotation axis 3. By this arrangement, the first teeth 13 of the first end face tooth portion 12 are facing the rotation axis 3 instead of being in an inclined state when viewed in the direction facing the first end face tooth portion 12. Thus, after the first end tooth portion 12 of the engaging piece is meshed with the second end face tooth portion of the mating piece, the centripetal force when the engaging piece and the mating piece rotate is toward the rotation axis 3, which can better improve the fit tightness of the engaging piece and the mating piece.

In some examples, the second point 15 may fall on an extension line of the second line 132.

As shown in FIG. 1, optionally, in an example of the invention, the two third lines 133 are symmetrically disposed with a midline of the corresponding first tooth 13 extending in the radial direction of the first disk body 11 as an axis of symmetry, and an extension line of the midline intersects the rotation axis 3. By this arrangement, the first tooth 13 of the first end face tooth portion 12 is facing the rotation axis 3, instead of being inclined when viewed in the direction facing the first end face tooth portion 12. Meanwhile, two side faces of the first tooth 13 may be symmetrically disposed with a midline of the corresponding first tooth 13 extending in the radial direction of the first disk body 11 as an axis of symmetry, so that after the engaging piece and the mating piece are connected, the forces on two sides of the first tooth 13 are the same, thus facilitating uniform transmission of torque.

Optionally, in an example of the invention, the second point 15 falls on the rotation axis 3. The engaging piece in such a manner that the second point 15 falls on the rotation axis 3, the engaging piece and the mating piece are high in matching for fit, thus being in tight fit and ensuring torque transmission, so that the problem of affecting the kinetic energy transmission due to insufficient fit degree is avoided.

Optionally, in one example of the invention, two third lines 133 of each first tooth 13 intersect at one second point 15, respectively, and all the second points 15 fall on the rotation axis 3. By this arrangement, the plurality of first teeth 13 are evenly distributed around the rotation axis 3, so that the stresses of all the first teeth 13 are balanced for ensuring that the torque is uniformly transmitted, and the structural strengths of all the first teeth 13 are balanced.

Optionally, in another example of the invention, the second point 15 falls on the circumference of a second circle 18, the center of the second circle 18 falls on the rotation axis 3, and the radius of the second circle 18 is smaller than the radius of the first circle 16.

By this arrangement, the meshing between the engaging piece and the mating piece can generate a centripetal force toward the rotation axis 3, so that the engaging piece and the mating piece will not be loosened, and the torque transmission capacity is improved.

Optionally, in other examples, two third lines 133 of each first tooth 13 intersect at one second point 15, respectively, all the second points 15 fall on the circumference of the same second circle 18, and all the second points 15 do not coincide on the circumference of the second circle 18. That is, all the second points 15 do not fall on the rotation axis 3, and are arranged eccentrically with respect to the rotation axis 3.

Optionally, in an example of the invention, each first tooth 13 includes a first tooth top face 134, a first tooth bottom face 135, two first tooth side faces 136 and two opposite first tooth end faces 137, where the first tooth bottom face 135 is connected to the first disk body 11, one first tooth end face 137 is closer to the rotation axis 3 than the other first tooth end face 137, the first line 131 is configured to a first tooth top line of the first tooth top face 134, the second line 132 is configured to a first tooth bottom line of the first tooth bottom face 135, and bottom edge lines of the two first tooth side faces 136 are configured to the third lines 133. By this arrangement, the weight of each first tooth 13 can be reduced, thus facilitating lightweight and also facilitating the meshing of the mating piece.

In the direction along the rotation axis 3, the first tooth top face 134 is located above the first tooth bottom face 135, four side edges of the first tooth top face 134 are respectively connected to tops of the two first tooth side faces 136 and the two first tooth end faces 137, and four side edges of the first tooth bottom face 135 are respectively connected to bottoms of the two first tooth side faces 136 and the two first tooth end faces 137.

The bottom edge lines of the two first tooth side faces 136 are the third lines 133. It can be understood that the first tooth bottom face 135 is the same plane as the radial plane 4 of the above example, and the third lines 133 extend on the radial plane 4. Meanwhile, the second line 132 also extends on the radial plane 4, and the first line 131 extends above and intersects the radial plane 4.

Optionally, in one example of the invention, the midline of the first tooth top face 134 extending in the radial direction of the first disk body 11 is configured to the first line 131, and the midline of the first tooth bottom face 135 extending in the radial direction of the first disk body 11 is configured to the second line 132. By this arrangement, the uniformity of the thickness of the second end of the corresponding first tooth 13 in the direction along the rotation axis 3 can be ensured. It will be appreciated that the first line 131 may be the midline of the first tooth top face 134, the second line 132 may be the midline of the first tooth bottom face 135, and since the first line 131 is located above the second line 132, the projection of the first line 131 on the radial plane 4 overlaps the second line 132.

Optionally, in an example of the invention, the first tooth top face 134 is configured to a planar structure or a curved surface structure. By this arrangement, the structural strength of each first tooth 13 can be increased, and the torque transmission performance can be improved.

Optionally, in an example of the invention, each first tooth 13 includes a first tooth bottom face 135, two first tooth side faces 136 and two opposite first tooth end faces 137, where the first tooth bottom face 135 is connected to the first disk body 11, one first tooth end face 137 is closer to the rotation axis 3 than the other first tooth end face 137, tops of the two first tooth side faces 136 intersect, so that the first tooth end face 137 is triangular, an intersection line of the tops of the two first tooth side faces 136 is configured to the first line 131, the midline of the first tooth bottom face 135 extending in the radial direction of the first disk body 11 is configured to the second line 132, and bottom edge lines of the two first tooth side faces 136 are configured to the third lines 133.

It can be understood that the top of each first tooth 13 does not have a face structure, and the top of each first tooth 13 is of a line structure, so that the number of first teeth 13 of the first end face tooth portion 12 can be increased, thus improving the tightness of fit of the engaging piece and the mating piece.

Optionally, in one example of the invention, a width dimension of a first end of each first tooth 13 is greater than a width dimension of a second end of the corresponding first tooth 13 on one radial plane 4, and the width dimension of each first tooth 13 linearly decreases from the first end of the corresponding first tooth 13 to the second end of the corresponding first tooth 13. By this arrangement, after the first end face tooth portion 12 of the engaging piece is meshed with a second end face tooth portion of the mating piece, interaction forces between the first end face tooth portion 12 and the second end face tooth portion are crossed, which can improve the meshing tightness between the first end face tooth portion and the second end face tooth portion and facilitate the transmission of torque.

As shown in FIG. 2, optionally, in one example of the invention, the first end face tooth portion 12 further includes a first tooth space 17 located between two adjacent first teeth 13, and the projection of the first tooth space 17 in the direction facing the rotation axis 3 is triangular. By providing the first tooth space 17, it is possible to facilitate snap-in of the second end face tooth portion of the mating piece so as to achieve the meshing of the first end face tooth portion 12 and the second end face tooth portion. By setting the projection of the first tooth space 17 to be in a triangular shape, the flexibility of assembly can be improved, the structural strength of different assembly structures can be adapted, and the connection and matching of different assembly structures can be facilitated. It needs to be noted that the projection of the first tooth space 17 in the direction facing the rotation axis 3 may also be trapezoidal, and the first tooth space has the same structure as the first tooth 13. It needs to be noted that space walls on two sides of the first tooth space 17 are the two first tooth side faces 136 of the two first teeth 13 of the above example.

A second aspect of the invention also provides an engaging device, including a fastening component, a mating piece, and the engaging piece for torque transmission described above, where the mating piece and the engaging piece are both connected to the fastening component, and the fastening component is configured to tightly mesh the mating piece with the engaging piece.

Optionally, in one example of the invention, the mating piece includes a second disk body, where the second disk body can rotate about the rotation axis 3, and is provided with a second end face tooth portion, and the second end face tooth portion is configured to mesh with the first end face tooth portion 12 of the engaging piece so as to transmit torque.

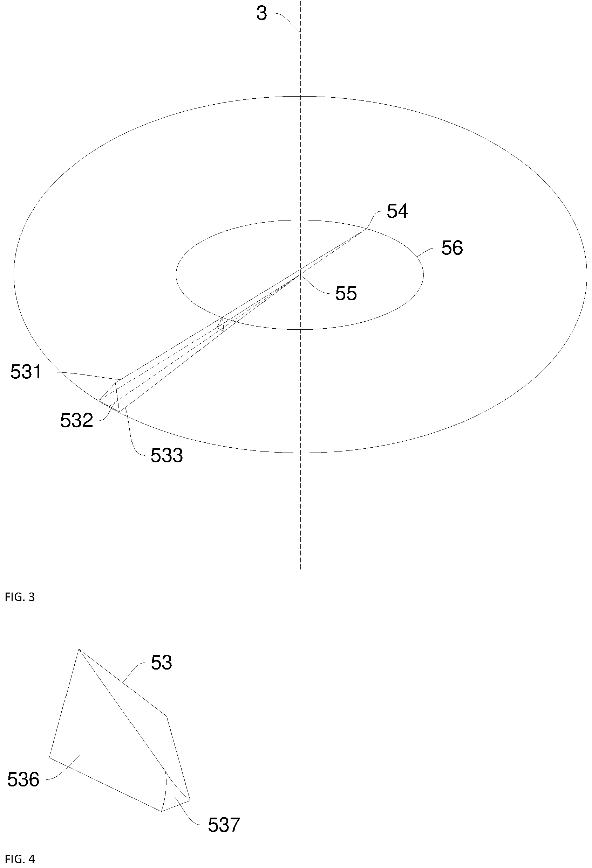

As shown in FIG. 3, the second end face tooth portion includes a plurality of second teeth 53, where two sides of each second tooth 53 are provided with second tooth side lines 533, respectively, extension lines of the two second tooth side lines 533 of at least one second tooth 53 intersect at a fourth point 55, and the fourth point 55 falls on the rotation axis 3. By setting the fourth point 55 to fall on the rotation axis 3, the second tooth 53 directly faces the rotation axis 3, rather than being inclined relative to the rotation axis 3, and the meshing matching of the first tooth 13 and the second tooth 53 is facilitated, thus improving torque transmission.

As shown in FIG. 3, optionally, in one example of the invention, each second tooth 53 has a second tooth top line 531 and a second tooth bottom line 532, an extension line of the second tooth top line 531 of at least one second tooth 53 and an extension line of the second tooth bottom line 532 intersect at a third point 54, the third point 54 is farther from the corresponding second tooth 53 than the rotation axis 3, and the third point 54 does not fall on the rotation axis 3.

The extension line of the second tooth top line 531 and the extension line of the second tooth bottom line 532 cross the rotation axis 3 and intersect at the third point 54, that is, the third point 54 does not fall on the rotation axis 3. By this arrangement, the thickness of the second tooth 53 at an end close to the rotation axis 3 can be increased, so that the structural strength can be increased, and interaction forces can be generated when the engaging piece and the mating piece are connected, so that the torque transmission can be increased. The plurality of second teeth 53 are also radially arranged around the rotation axis 3, and similarly, the second tooth top line 531 and the second tooth bottom line 532 of each second tooth 53 are also radially arranged around the rotation axis 3.

As shown in FIG. 3, optionally, in one example of the invention, the third point 54 falls on the circumference of a third circle 56, and the center of the third circle 56 falls on the rotation axis 3. By setting the center of the third circle 56 to fall on the rotation axis 3, the second tooth 53 faces the rotation axis 3, so that when the engaging piece and the mating piece are connected, a centripetal force toward the rotation axis 3 is generated, and thus the fit tightness of the engaging piece and the mating piece is improved. In some examples, the first circle 16, the second circle 18, and the third circle 56 are all concentric circles, that is, the centers of these circles all fall on the rotation axis 3, and the radii of the first circle 16, the second circle 18, and the third circle 56 may be different.

Optionally, in an example of the invention, the extension line of the second tooth top line 531 and the extension line of the second tooth bottom line 532 of each second tooth 53 intersect at one third point 54, respectively, all the third points 54 fall on the circumference of the same third circle 56, and all the third points 54 do not coincide on the circumference of the third circle 56. The reason for this arrangement is that the plurality of second teeth 53 are evenly distributed around the rotation axis 3, and the thicknesses of all the second teeth 53 in the direction along the rotation axis 3 are the same, in such a way, the third points 54 of all the second teeth 53 will fall on the circumference of the same third circle 56, so that the stresses of all the second teeth 53 are balanced for ensuring that the torque is uniformly transmitted, and the structural strengths of all the second teeth 53 are balanced.

Optionally, in another example of the invention, each second tooth 53 has a second tooth top line 531 and a second tooth bottom line 532, where an extension line of the second tooth top line 531 and an extension line of the second tooth bottom line 532 of at least one second tooth 53 intersect at a third point 54, and the third point 54 falls on the rotation axis 3 and coincides with the fourth point 55.

The extension line of the second tooth top line 531 and the extension line of the second tooth bottom line 532 intersect the rotation axis 3. By this arrangement, the second teeth directly face the rotation axis 3, and rotational axes of the second teeth are all on the rotation axis.

Optionally, the extension line of the second tooth top line 531 and the extension line of the second tooth bottom line 532 of each second tooth 53 intersect at one third point 54, respectively, and all the third points 54 fall on the rotation axis 3. The reason for this arrangement is that the plurality of second teeth 53 are evenly distributed around the rotation axis 3, and the thicknesses of all the second teeth 53 in the direction along the rotation axis 3 are the same, so that the stresses of all the second teeth 53 are balanced for ensuring that the torque is uniformly transmitted, and the structural strengths of all the second teeth 53 are balanced.

As shown in FIG. 4, optionally, in one example of the invention, each second tooth 53 includes a second tooth bottom face and two second tooth side faces 536, where the second tooth bottom face is connected to the second disk body, and the two second tooth side faces 536 are each provided with a recessed portion, so that the two second tooth side faces 536 are both of a cambered structure. By setting the two second side faces 536 to be of a cambered structure, the meshing of the first end face tooth portion 12 and the second end face tooth portion is facilitated, thus solving the problem of assembly interference, so that the assembly can be performed better.

The mating piece and the engaging piece can be connected and matched with each other to realize torque transmission, the first end face tooth portion 12 is arranged on one side of the first disk body 11, the second end face tooth portion is arranged on one side of the second disk body, and the first end face tooth portion 12 and the second end face tooth portion can be meshed.

A second tooth space is arranged between two adjacent second teeth 53, so that the first tooth 13 of the first end face tooth portion 12 can be snapped into the second tooth space of the second end face tooth portion, and correspondingly, the second tooth 53 of the second end face tooth portion can be snapped into the first tooth space 17 of the first end face tooth portion 12.

Optionally, in one example of the invention, each second tooth 53 further includes a second tooth top face and two opposite second tooth end faces 537, where one second tooth end face 537 is closer to the rotation axis 3 than the other second tooth end face 537, and the second tooth end face 537 is trapezoidal. That is, the second tooth 53 is substantially the same shape as the first tooth 13.

It needs to be noted that the shape of the first tooth space 17 is the same as the shape of the second tooth 53, so that the projection of the first tooth space 17 in the direction perpendicular to the rotation axis 3 is trapezoidal.

As shown in FIG. 4, optionally, in another example of the invention, each second tooth 53 further includes two opposite second tooth end faces 537, where one second tooth end face 537 is closer to the rotation axis 3 than the other second tooth end face 537, and tops of the two second tooth side faces 536 intersect, so that the second tooth end face 537 is triangular.

By this arrangement, the second tooth 53 is a tetrahedral tooth, and the strength of the second tooth 53 is smaller than that of the first tooth 13, so that the adaptation freedom of engaging piece and the mating piece is higher, and the connection and assembly are more flexible.

It needs to be noted that the shape of the first tooth space 17 is the same as the shape of the second tooth 53, so that the projection of the first tooth space 17 in the direction perpendicular to the rotation axis 3 is triangular.

A third aspect of the invention further provides a torque transmission assembly, including a drive shaft ball cage, a hub bearing, and the engaging device described above, where the drive shaft ball cage and the hub bearing are connected, one of the mating piece and the engaging piece of the engaging device is connected to the drive shaft ball cage, and the other of the mating piece and the engaging piece is connected to the hub bearing.

The drive shaft ball cage and the hub bearing are connected by a connecting bolt, and the connecting bolt passes through the engaging piece and the mating piece to produce a pressing action, so that the first end face tooth portion 12 of the engaging piece is tightly meshed with the second end face tooth portion of the mating piece to ensure torque transmission.

A fourth aspect of the invention further provides a vehicle, including the engaging piece for torque transmission described above, or the engaging device, or the torque transmission assembly described above.

## Claims

1. An engaging piece for torque transmission, comprising:
a first disk body (11), having a rotation axis (3) and rotatable about the rotation axis (3); and
a first end face tooth portion (12) on the first disk body (11) and configured to mesh with a mating piece connected to the engaging piece so as to transmit torque; wherein
the first end face tooth portion (12) comprises a plurality of first teeth (13), a top of each first tooth (13) has a first line (131), a bottom of each first tooth (13) has a second line (132), two sides of each first tooth (13) each have a third line (133), each first tooth (13) has a first end away from the rotation axis (3) and a second end close to the rotation axis (3), and the first line (131), the second line (132) and the third lines (133) all extend along a direction from the first end of the corresponding first tooth (13) to the second end of the corresponding first tooth (13); and
an extension line of the first line (131) and an extension line of the second line (132) of at least one first tooth (13) intersect at a first point (14), extension lines of the two third lines (133) of at least one first tooth (13) intersect at a second point (15), and the first point (14) is closer to the corresponding first tooth (13) than the second point (15).

2. The engaging piece for torque transmission according to claim 1, wherein the engaging piece has one virtual radial plane (4), and the first point (14) and the second point (15) are both located on the radial plane (4); or
the engaging piece has two virtual radial planes (4), and the first point (14) and the second point (15) are located on the two radial planes (4), respectively;
optionally, an included angle between the first line (131) and the radial plane (4) is α, where 0°<α<90°.

3. The engaging piece for torque transmission according to claim 1 or 2, wherein the first point (14) is closer to the corresponding first tooth (13) than the rotation axis (3); and/or
the second point (15) is closer to the corresponding first tooth (13) than the rotation axis (3).

4. The engaging piece for torque transmission according to any one of claim 1-3, wherein the extension line of the second line (132) intersects the rotation axis (3); and/or
the two third lines (133) are symmetrically disposed with a midline of the corresponding first tooth (13) extending in a radial direction of the first disk body (11) as an axis of symmetry, and an extension line of the midline intersects the rotation axis (3).

5. The engaging piece for torque transmission according to any one of claim 1-4, wherein the first point (14) falls on a circumference of a first circle (16), and a center of the first circle (16) falls on the rotation axis (3);
optionally, the first line (131) and the second line (132) of each first tooth (13) intersect at one first point (14), respectively, all the first points (14) fall on the circumference of the same first circle (16), and all the first points (14) do not coincide on the circumference of the first circle (16);
optionally, the second point (15) falls on a circumference of a second circle (18), a center of the second circle (18) falls on the rotation axis (3), and a radius of the second circle (18) is smaller than a radius of the first circle (16).

6. The engaging piece for torque transmission according to any one of claim 1-5, wherein two third lines (133) of each first tooth (13) intersect at one second point (15); respectively, wherein
all the second points (15) fall on the rotation axis (3); or,
all the second points (15) fall on a circumference of a same second circle (18), and all the second points (15) do not coincide on the circumference of the second circle (18).

7. The engaging piece for torque transmission according to any one of claim 1-6, wherein each first tooth (13) comprises a first tooth top face (134), a first tooth bottom face (135), two first tooth side faces (136) and two opposite first tooth end faces (137), wherein the first tooth bottom face (135) is connected to the first disk body (11), one first tooth end face (137) is closer to the rotation axis (3) than the other first tooth end face (137), the first line (131) is configured to a first tooth top line of the first tooth top face (134), the second line (132) is configured to a first tooth bottom line of the first tooth bottom face (135), and bottom edge lines of the two first tooth side faces (136) are configured to the third lines (133);
optionally, a midline of the first tooth top face (134) extending in a radial direction of the first disk body (11) is configured to the first line (131), and a midline of the first tooth bottom face (135) extending in the radial direction of the first disk body (11) is configured to the second line (132);
optionally, the first tooth top face (134) is configured to a planar structure or a curved surface structure.

8. The engaging piece for torque transmission according to any one of claim 1-7, wherein a width dimension of a first end of each first tooth (13) is greater than a width dimension of a second end of the corresponding first tooth (13) on one radial plane (4), and a width dimension of each first tooth (13) linearly decreases from the first end of the corresponding first tooth (13) to the second end of the corresponding first tooth (13).

9. The engaging piece for torque transmission according to any one of claims 1-8, wherein the first end face tooth portion (12) further comprises a first tooth space (17) located between two adjacent first teeth (13), and a projection of the first tooth space (17) in a direction facing the rotation axis (3) is triangular.

10. An engaging device, comprising a fastening component, a mating piece, and the engaging piece for torque transmission according to any one of claims 1-9, wherein the mating piece and the engaging piece are both connected to the fastening component, and the fastening component is configured to tightly mesh the mating piece with the engaging piece.

11. The engaging device according to claim 10, wherein the mating piece comprises a second disk body, wherein the second disk body can rotate about a rotation axis (3), and is provided with a second end face tooth portion, and the second end face tooth portion is configured to mesh with a first end face tooth portion (12) of the engaging piece so as to transmit torque;
the second end face tooth portion comprises a plurality of second teeth (53), wherein two sides of each second tooth (53) are provided with second tooth side lines (533), respectively, extension lines of the two second tooth side lines (533) of at least one second tooth (53) intersect at a fourth point (55), and the fourth point (55) falls on the rotation axis (3);
optionally, each second tooth (53) has a second tooth top line (531) and a second tooth bottom line (532); wherein
an extension line of the second tooth top line (531) of at least one second tooth (53) crosses the rotation axis (3) and intersects an extension line of the second tooth bottom line (532) at a third point (54), and the third point (54) does not fall on the rotation axis (3);
optionally, the extension line of the second tooth top line (531) of at least one second tooth (53) intersects the rotation axis (3), the third point (54) falls on a circumference of a third circle (56), and a center of the third circle (56) falls on the rotation axis (3).

12. The engaging device according to claim 10, wherein the mating piece comprises a second disk body, wherein the second disk body can rotate about a rotation axis (3), and is provided with a second end face tooth portion, and the second end face tooth portion is configured to mesh with a first end face tooth portion (12) of the engaging piece so as to transmit torque;
the second end face tooth portion comprises a plurality of second teeth (53), wherein two sides of each second tooth (53) are provided with second tooth side lines (533), respectively, extension lines of the two second tooth side lines (533) of at least one second tooth (53) intersect at a fourth point (55), and the fourth point (55) falls on the rotation axis (3);
each second tooth (53) has a second tooth top line (531) and a second tooth bottom line (532);
wherein
an extension line of the second tooth top line (531) and an extension line of the second tooth bottom line (532) of at least one second tooth (53) intersect at a third point (54), and the third point (54) falls on the rotation axis (3) and coincides with the fourth point (55).

13. The engaging device according to claim 11 or 12, wherein each second tooth (53) comprises a second tooth top face and two opposite second tooth end faces (537), wherein one second tooth end face (537) is closer to the rotation axis (3) than the other second tooth end face (537), and the second tooth end face (537) is trapezoidal; or,
each second tooth (53) further comprises two opposite second tooth end faces (537), wherein one second tooth end face (537) is closer to the rotation axis (3) than the other second tooth end face (537), and tops of the two second tooth side faces (536) intersect, so that the second tooth end face (537) is triangular;
optionally, each second tooth (53) further comprises a second tooth bottom face and two second tooth side faces (536), wherein the second tooth bottom face is connected to the second disk body, and the two second tooth side faces (536) are each provided with a recessed portion, so that the two second tooth side faces (536) are both of a cambered structure.

14. A torque transmission assembly comprising a drive shaft ball cage, a hub bearing, and the engaging device according to any one of claims 10-13, wherein the drive shaft ball cage and the hub bearing are connected, one of a mating piece and an engaging piece of the engaging device is connected to the drive shaft ball cage, and the other of the mating piece and the engaging piece is connected to the hub bearing.

15. A vehicle, comprising the engaging piece for torque transmission according to any one of claims 1-9, or the engaging device according to any one of claims 10-13, or the torque transmission assembly according to claim 14.
